# EUROPÄISCHE PATENTSCHRIFT

(11) **EP 4 359 684 B1**
(45) Veröffentlichungstag und Bekanntmachung des Hinweises auf die Patenterteilung: **25.09.2024**
(21) Anmeldenummer: 23793892.3
(22) Anmeldetag: 24.10.2023
(51) Int. Cl.: F16D 55/226, F16D 65/40, F16D 65/56

(54) **ELEKTROMECHANISCHE BREMSVORRICHTUNG FÜR EIN KRAFTFAHRZEUG**
ELECTROMECHANICAL BRAKE DEVICE FOR A MOTOR VEHICLE
DISPOSITIF DE FREINAGE ÉLECTROMÉCANIQUE POUR VÉHICULE AUTOMOBILE

(30) Priorität: 08.12.2022 BE 202205999; 07.03.2023 BE 202305167
(43) Veröffentlichungstag der Anmeldung: 01.05.2024
(73) Patentinhaber: thyssenkrupp Presta AG, 9492 Eschen (LI); thyssenkrupp AG, 45143 Essen (DE)
(72) Erfinder: SZIMANDL, Barna, 9473 Gams (CH); PONGRATZ, Dennis, 6842 Koblach (AT); SLATINSKY, Jan, 9470 Buchs (CH)
(74) Vertreter: thyssenkrupp Intellectual Property GmbH
(86) Internationale Anmeldenummer: PCT/EP2023/079650
(87) Internationale Veröffentlichungsnummer: WO 2024/047261

(56) Entgegenhaltungen:
- WO-A1-2021/251709
- DE-A1- 10 014 993
- DE-A1- 19 711 851
- DE-T2- 3 872 257
- US-A1- 2013 327 606
- US-A1- 2021 301 889

## Beschreibung

### Stand der Technik

Die Erfindung betrifft eine elektromechanische Bremsvorrichtung für ein Kraftfahrzeug, umfassend eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, von dem ein erstes Abtriebselement und ein relativ dazu axial verstellbares erstes Antriebselement relativ zueinander drehend antreibbar sind, und der zweite Stelltrieb ein drehend antreibbares, zu dem ersten Antriebsrad koaxiales zweites Antriebsrad aufweist, von dem eine Gewindespindel drehend antreibbar ist, die ein Spindelgewinde aufweist, welches in ein Innengewinde des ersten Stelltriebs eingreift. Ein Beispiel einer derartigen Bremsvorrichtung ist durch das Dokument des Standes der Technik US 2021/301889 A1 offenbart.

Eine derartige Bremsvorrichtung eines Kraftfahrzeugs ist als Reibungsbremse ausgebildet, bei dem ein am Fahrgestellt abgestütztes, relativ zur Drehung des zu bremsenden Rades feststehendes Bremsteil mittels einer Stellvorrichtung in Bremseingriff gebracht werden kann mit einem Gegenbremsteil, welches mit dem Rad rotiert. Im Bremseingriff wird ein Reibkontakt zwischen Bremsteil und Gegenbremsteil erzeugt, wobei das durch Reibung erzeugte Bremsmoment umso größer ist, je höher die von der Stellvorrichtung in der Verstellrichtung ausgeübte Verstellkraft ist.

Eine verbreitete Bauform sind die im Prinzip bekannten Scheibenbremsen, bei denen das Gegenbremsteil durch eine mit dem Rad rotierende Bremsscheibe gebildet wird, die von einem Bremssattel beidseitig axial umgriffen wird. Durch mindestens einen an dem Bremssattel axial abgestützten, bevorzugt linearen Stelltrieb kann ein Bremsteil, in der Regel ein Bremsbelag, in einer axialen Verstellrichtung verstellt und dadurch in Reibkontakt mit einer Axialseite der Bremsscheibe gebracht werden, wobei die Bremsscheibe zwischen dem verstellten Bremsteil und einem weiteren, axial gegenüberliegend an dem Bremssattel abgestützten Bremsteil im Bremseingriff reibschlüssig eingespannt wird.

Voraussetzung für eine einwandfreie Funktion und ein punktgenaues Ansprechen der Bremse ist, dass im unbetätigten Zustand zwischen dem Bremsteil und dem Gegenbremsteil in der Verstellrichtung ein definierter Abstand, der sogenannte Luftspalt bereitgestellt wird. Bei der Betätigung der Bremse wird das Bremsteil durch die Stellvorrichtung senkrecht zum Luftspalt auf das Gegenbremsteil zu bewegt, bis der Luftspalt überwunden und der Reibkontakt erreicht ist, so dass der Bremseingriff erzeugt ist.

Für ein reproduzierbares und punktgenaues Ansprechen der Bremse im Fahrbetrieb ist es maßgeblich, dass der Luftspalt im unbetätigten Zustand in der axialen Verstellrichtung gemessen eine definierte Spaltbreite hat. Die Spaltbreite kann sich im Laufe des Betriebs beispielsweise durch Abnutzung des Bremsbelags vergrößern, und muss entsprechend nachjustiert werden. Zur Justierung des Luftspalts ist es aus der EP 3 691 943 B1 bekannt, dass die Stellvorrichtung zwei in Verstellrichtung seriell angeordnete Stelltriebe aufweist. Jeder der Stelltriebe weist ein antriebsseitiges Antriebselement und ein relativ dazu linear in der axialen Verstellrichtung verstellbares abtriebsseitiges Abtriebselement auf. Zur Realisierung einer Verstellbewegung weist jedes Antriebselement ein Antriebsrad auf, bevorzugt ein Getrieberad wie ein Zahnrad oder dergleichen, welches durch einen elektrischen Stellmotor um seine Achse drehend antreibbar ist. Die Drehung des Antriebsrads wird in dem Stelltrieb jeweils in eine relative Verstellbewegung bzw einen Stellhub des Abtriebselements relativ zum Antriebselement in der axialen Verstellrichtung umgesetzt. In dem gattungsgemäßen Stand der Technik sind die beiden Antriebsräder des ersten und zweiten Stelltriebs koaxial auf einer in der axialen Verstellrichtung liegenden gemeinsamen Achse angeordnet.

Ein Stelltrieb bildet jeweils eine in der Verstellrichtung, d.h. axial wirksame Hub- oder Verstelleinrichtung. Der erste Stelltrieb kann beispielsweise ein Rampenlager, Nocken- oder Kurvenscheiben, Kippstiftanordnungen oder dergleichen Mechanismen umfassen, die ausgebildet sind, eine Drehung des ersten Antriebselements in eine lineare Verstellung des ersten Abtriebselements umzusetzen. Der zweite Stelltrieb weist In der gattungsgemäßen Bauform einen Spindeltrieb auf, mit einer von dem ersten Antriebselement antreibbaren Gewindespindel, die mit ihrem als Außengewinde in ein Innengewinde des ersten Stelltriebs eingreift. In der oben genannten EP 3 691 943 B1 greift die axial fix gelagerte Gewindespindel in ein Innengewinde des ersten Antriebselements ein.

Dadurch, dass das Antriebselement des zweiten Stelltriebs mit dem Abtriebselement des ersten Stelltriebs gekoppelt ist, und das Bremselement am Abtriebselement des zweiten Stelltriebs angebracht ist, kann durch eine Betätigung des ersten Stelltriebs das Bremselement zusammen mit dem zweiten Stelltrieb linear verstellt werden, um den Bremseingriff zu erzeugen. Durch eine Verstellung des zweiten Stelltriebs unabhängig von der Betätigung des ersten Stelltriebs kann der Luftspalt justiert werden. Der erste Stelltrieb kann somit durchgehend im optimalen Arbeitsbereich betrieben werden.

Ein weiterer Vorteil der zwei gekoppelten Stelltriebe ist, dass eine redundante Auslegung möglich ist. So kann beispielsweise durch den im Normalbetrieb lediglich zur Justierung des Luftspalts eingesetzten zweiten Stelltrieb grundsätzlich auch der Bremseingriff erzeugt werden.

Zur Justierung des Luftspalts kann in der vorgenannten EP 3 691 943 B1 der gesamte erste Stelltrieb einschließlich An-und Abtriebselement durch den Spindeltrieb des zweiten Stelltriebs axial verlagert werden. Um die Übertragung des Antriebsmoments des ersten Stelltriebs zu ermöglichen, ist das erste Antriebselement mit dem ersten Antriebsrad drehmomentschlüssig und dabei axial verlagerbar gekuppelt. Hierzu sind radial nach außen von dem Antriebselement vorstehende Formschlusselemente vorgesehen, die in axialen Führungen in einem an dem ersten Antriebsrad angeordneten rohrförmigen Ansatz axial geführt sind und dabei einen in Umfangsrichtung wirksamen Formschluss zur Übertragung des Antriebsmoments erzeugen. Diese Anordnung zwar die geforderte Funktionalität, beansprucht jedoch einen relativ großen Bauraum. Außerdem ist die Realisierung einer spielarmen axialen Führung des Antriebselements.aufwendig.

Angesichts der vorangehend erläuterten Problematik ist es eine Aufgabe der vorliegenden Erfindung, einen kompakteren und weniger aufwendigen Aufbau zu ermöglichen.

### Darstellung der Erfindung

Diese Aufgabe wird erfindungsgemäß gelöst durch die Bremsvorrichtung mit den Merkmalen des Anspruchs 1. Vorteilhafte Weiterbildungen ergeben sich aus den Unteransprüchen.

Bei einer elektromechanischen Bremsvorrichtung für ein Kraftfahrzeug, umfassend eine Stellvorrichtung und ein damit verbundenes Bremsteil, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, von dem ein erstes Abtriebselement und ein relativ dazu axial verstellbares erstes Antriebselement relativ zueinander drehend antreibbar sind, und der zweite Stelltrieb ein drehend antreibbares, zu dem ersten Antriebsrad koaxiales zweites Antriebsrad aufweist, von dem eine Gewindespindel drehend antreibbar ist, die ein Spindelgewinde aufweist, welches in ein Innengewinde des ersten Stelltriebs eingreift, ist erfindungsgemäß vorgesehen, dass die Gewindespindel und das zweite Antriebsrad korrespondierende, ineinandergreifende Formschlusselemente aufweisen, die ausgebildet sind zur Erzeugung eines bezüglich Drehung um die Achse in Umfangsrichtung wirksamen Formschlusses, und die axial relativ zueinander verlagerbar sind.

Der erste und der zweite Stelltrieb werden gemeinsam im Folgenden auch kurz als die Stelltriebe bezeichnet. Die Stelltriebe weisen um die Achse durch elektrische Antriebsmotoren antreibbare Antriebsräder auf, bevorzugt Zahnräder, beispielsweise Stirnräder. Im ersten Stelltrieb können über das erste Antriebsrad das erste Antriebselement und das erste Abtriebselement relativ zueinander um die gemeinsame Achse drehend angetrieben werden, so dass durch eine Hub- oder Verstelleinrichtung wie eingangs beschriebenen das An- und Abtriebselement in einem Verstellhub axial relativ zueinander verstellt werden, wobei die Bezeichnungen "abtriebsseitig" und "antriebsseitig" so verwendet werden, dass die sich auf die axiale Wirkrichtung des Stelltriebs beziehen. Die erste Stelleinrichtung kann beispielsweise ein Rampenlager umfassen, welches auch als Kugelrampenanordnung bezeichnet wird und als An- und Abtriebselement bevorzugt Kurvenscheiben mit gegen die Achse geneigten Laufbahnen oder Rampen aufweisen, zwischen denen in Umfangsrichtung abwälzbare Kugeln angeordnet sind. Alternativ können andere bekannte Hub-oder Verstellmechanismen vorgesehen sein, beispielsweise eine Keilscheiben- oder Kippstiftanordnung, ein Spindeltrieb oder dergleichen.

Die Antriebsräder können jeweils als Zahnrad, beispielsweise als Stirnrad, oder auch als Riemen- oder Zahnriemenrad oder Schneckenrad ausgebildet sein, so dass generell ein Getrieberad zur Verfügung gestellt wird, über das ein Antriebsmoment von einem elektrischen Stellmotor in den Stelltrieb eingekoppelt werden kann.

Der zweite Verstellantrieb ist als Spindeltrieb ausgebildet. Dieser weist eine über das zweite Antriebsrad drehend antreibbare Gewindespindel auf, die abtriebsseitig mit dem Bremsteil verbunden ist, und die mit ihrem Außengewinde, dem Spindelgewinde, in das Innengewinde einer Spindelmutter des zweiten Antriebselements eingreift.

Das Spindelgewinde kann bevorzugt selbsthemmend ausgebildet sein. Dies kann durch eine relativ flache Gewindesteigung verwirklicht sein, die aufgrund der wirkenden Reibung eine relative Drehung von Gewindespindel und Spindelmutter auch bei hohen einwirkenden axialen Kräften verhindert. Dadurch bleibt die durch den zweiten Stelltreib eingestellte Justierung des Luftspalts erhalten. Außerdem kann durch die flache Gewindesteigung eine besonders feinfühlige und präzise Justierung des Luftspalts erfolgen.

Zur Ausbildung der eingangs beschriebenen seriellen Kopplung der Stelltriebe ist die Spindelmutter des zweiten Antriebselements bevorzugt baulich vereinigt mit dem ersten Abtriebselement, und kann beispielsweise als Innengewinde in einer Kurvenscheibe ausgebildet sein.

Erfindungsgemäß hat die Gewindespindel eine mehrfache Funktion. So wird über das Spindelgewinde die Wirkverbindung des Spindeltriebs zur axialen Verstellung realisiert. Zusätzlich ist die Antriebsfunktion integriert, gemäß der von dem zweiten Antriebsrad ein Antriebsmoment in die Gewindespindel eingekoppelt werden kann, wobei diese relativ zum Antriebsrad axial verlagerbar ist. Konkret erfolgt eine axiale Verlagerung zusammen mit dem ersten Abtriebselement bei jeder Betätigung des ersten Stelltriebs zur Erzeugung eines Bremseingriffs. Die Verlagerbarkeit wird erfindungsgemäß durch ineinandergreifende Formschlusselemente realisiert, die einen bezüglich Drehung um die Achse in Umfangsrichtung wirksamen Formschluss zwischen zweitem Antriebsrad und Gewindespindel erzeugen, so dass eine drehschlüssige lineare Führung gebildet wird, über die das Antriebsmoment einkoppelbar ist. Dadurch, dass die Formschlusselemente unter Beibehaltung des Formschlusses in Umfangsrichtung in axialer Richtung relativ zueinander verschiebbar ausgestaltet sind, wird der drehende Antrieb auch bei den relativ zueinander axial verlagerbaren Stelltrieben ermöglicht.

Ein Vorteil der Erfindung ist, dass durch die Integration der axial verlagerbaren Antriebsfunktion in die Gewindespindel eine kompaktere Bauform als im Stand der Technik realisierbar ist, bei dem die Spindelmutter außen axial geführt ist. Durch den im Vergleich zur Spindelmutter geringeren Durchmesser der Gewindespindel können die beim drehenden Antrieb und bei einer axialen Verlagerung auftretenden Momente und Kräfte besser und spielärmer abgefangen werden. Daraus resultiert eine höhere Steifigkeit und eine verbesserte Funktionalität.

Es ist vorteilhaft, dass ein Formschlusselement im Bereich des Spindelgewindes angeordnet ist. Dadurch, dass das Formschlusselement innerhalb des Querschnitts der Gewindespindel ausgebildet ist, kann deren Außenkontur erhalten bleiben und wird insbesondere nicht vergrößert. Somit wird der Bauraumbedarf gegenüber einem Spindeltrieb ohne die erfindungsgemäße Funktionalität praktisch nicht vergrößert, so dass im Vergleich zum Stand der Technik eine kompaktere Konstruktion ermöglicht wird.

Es kann bevorzugt vorgesehen sein, dass die Formschlusselemente einen von dem zweiten Antriebsrad radial nach innen vorstehenden Mitnehmer und eine Axialnut in dem Spindelgewinde umfassen, in welche der Mitnehmer eingreift. Das Antriebsrad weist einen axialen Durchgang auf, durch den sich die Gewindespindel mit ihrem Spindelgewinde hindurch erstreckt. Mindestens ein Mitnehmer kann einen radial nach innen in den Durchgang vorstehenden Zahn, Nocken oder ähnlich ausgebildeten Vorsprung aufweisen. Dieser greift radial von außen derart in eine außen im Bereich des Spindelgewindes eingebrachte, axial linear erstreckte Axialnut ein, dass ein in Umfangsrichtung wirksamer Formschluss zwischen Antriebsrad und Gewindespindel erzeugt wird. Dabei ist zwischen dem Zahn und dem offenen Nutquerschnitt hinreichend Spiel vorgesehen, so dass der Mitnehmer in der Axialnut axial verschiebbar geführt ist. Eine derartige Antriebs- und Führungsanordnung kann baulich kompakt, mit geringem konstruktiven Aufwand und betriebssicher realisiert werden. Für den Betrieb ist weiterhin vorteilhaft, dass eine gemeinsame Schmierung des Gewindes und der Formschlusselemente ermöglicht ist, beispielsweise durch einen eingeschlossenen Schmierfettvorrat.

Es kann vorgesehen sein, dass die Axialnut sich über das gesamte Spindelgewinde erstreckt. Die Axialnut kann über die gesamte axiale Länge durch die Gewindegänge des Spindelgewindes durchgehen, so dass eine drehschlüssige lineare Führung über die gesamte Länge der Gewindespindel zur Verfügung gestellt werden kann. Dadurch kann in vorteilhafter Weise ein hinreichender Verstellbereich für die Verstellung des zweiten Stelltriebs durch die erste Stelleinheit ermöglicht werden.

Es ist vorteilhaft, dass die Axialnut radial tiefer in die Gewindespindel eingeformt ist als die Gewindegänge des Spindelgewindes. Dadurch, dass die Axialnut von außen tiefer in die Gewindespindel eingebracht ist als die umlaufende Gewindenut des Spindelgewindes, kann der Formschluss mit dem Mitnehmer in Umfangsrichtung belastbarer ausgebildet sein. Die daraus resultierende geringere Flächenpressung im Formschluss ermöglicht ein verbessertes Gleitverhalten in axialer Richtung. Dadurch kann außerdem die Belastung des Gewindezahns in Umfangsrichtung verringert werden.

Bevorzugt kann vorgesehen sein, dass eine Mehrzahl von Formschlusselementen über den Umfang verteilt angeordnet ist. Es können beispielsweise zwei oder mehr Mitnehmer und korrespondierende Axialnuten über den Umfang verteilt angeordnet sein, bevorzugt gleichmäßig verteilt. Dadurch kann eine vorteilhafte, bezüglich der Achse symmetrische Führung realisiert sein, wobei die einzelnen Formschlusselemente geringer belastet werden und entsprechend eine kleinere Bauform bzw. eine höhere Gesamt-Belastbarkeit realisiert werden kann.

Es ist möglich, dass der Mitnehmer einstückig mit dem zweiten Antriebsrad ausgebildet ist. Das zweite Antriebsrad kann beispielsweise ein Zahnrad aufweisen, welches einschließlich eines Zahnkranzes und eines Nabenteils mit dem Durchgang für die Gewindespindel ein- oder mehrteilig ausgebildet sein kann. Beispielsweise kann es ein Kunststoff-Spritzgussteil oder ein Metall-Spritzgussteil aufweisen oder als ein solches ausgebildet sein, an dem ein oder mehrere Mitnehmer einstückig angeformt sein können. Dadurch wird eine funktionssichere Bauweise mit geringem Gewicht und eine rationelle Fertigung und Montage ermöglicht.

Es kann vorgesehen sein, dass das Innengewinde in dem ersten Abtriebselement ausgebildet ist. Durch das erste Abtriebselement des ersten Stelltriebs ist der Spindeltrieb des daran angekoppelten zweiten Stelltriebs als Ganzes axial verstellbar. Dadurch, dass das erste Abtriebselement beispielsweise als Kurvenscheibe eines Rampenlagers, Keilscheibe, Kippstiftlager oder Gewindespindel der ersten Stelltriebs ausgebildet ist, mit dem die Spindelmutter des zweiten Stelltriebs integriert ausgebildet ist, kann eine besonders kompakte und betriebssichere Bauweise realisiert werden.

Es ist möglich, dass der erste Stelltrieb ein Kugelrampenlager, eine Keilscheibenanordnung oder eine Kippstiftanordnung aufweist. Bei einem Kugelrampenlager, welches auch kurz als Rampenlager oder Kugelrampenanordnung bezeichnet werden kann, weisen das Antriebs- und Abtriebselement bevorzugt Kurvenscheiben mit gegen die Achse geneigten Laufbahnen oder Rampen auf, zwischen denen in Umfangsrichtung abwälzbare Kugeln angeordnet sind. Eine relative Drehung führt durch die dabei auf den Rampen abrollenden Kugel dazu, dass das Abtriebselement relativ zum Antriebselement axial verlagert wird. Eine derartige Anordnung ist konstruktiv einfach, robust und betriebssicher. Alternativ kann eine an sich bekannten Kippstiftanordnung eigesetzt werden, bei der zwischen Antriebs- und Abtriebselement Kippstifte derart angeordnet und jeweils in Umfangsrichtung abgestützt sind, dass sie bei einer relativen Drehung je nach Drehrichtung stärker oder schwächer gegen die Achse geneigt werden, wodurch der Abstand zwischen Antriebs- und Abtriebselement ebenfalls verstellbar ist. Alternativ können Keilscheibenanordnungen, Spindeltriebe oder andere geeignete Mechaniken eingesetzt werden, die eine Umsetzung einer Drehung in eine axiale Verstellung ermöglichen.

Es kann vorgesehen sein, dass zwischen dem ersten Antriebsrad und dem zweiten Antriebsrad eine Kupplungsvorrichtung angeordnet ist, die als Reibkupplung ausgebildet ist mit einem Reibelement, dass im Kupplungseingriff reibschlüssig mit einem Gegenreibelement verbindbar ist.

Die Reibkupplung umfasst ein Reibelement, welches mit dem einen der Antriebsräder drehmomentschlüssig verbunden ist, und ein damit korrespondierendes Gegenreibelement, welches mit dem jeweils anderen Antriebsrad drehmomentschlüssig verbunden ist. Das Reibelement kann mit dem Gegenreibelement in jeder beliebigen relativen Winkelstellung in reibschlüssigen Kupplungseingriff gebracht werden. Dabei wird eine rein kraftschlüssige Kupplung realisiert, im Unterschied zu der formschlüssigen Rastverbindung im Stand der Technik. Dadurch kann die relative Stellung der Antriebsräder zueinander kontinuierlich vorgegeben werden, im Gegensatz zu den diskreten Raststufen im Stand der Technik. Entsprechend ist eine gleichmäßige, kontinuierliche Verstellung des zweiten Stelltriebs relativ zum ersten Stelltreib ermöglicht, und es kann eine kontinuierliche Justierung des Luftspalts erfolgen. Dies ist besonders vorteilhaft im Hinblick auf eine gleichmäßige Nachführung des optimalen Arbeitspunkts der Bremsvorrichtung an die kontinuierliche Abnutzung des Bremsteils im Betrieb, d.h. dem kontinuierlichen Verschleiß des Bremsbelags. Verglichen mit der im Stand der Technik nur stufenweisen Justiermöglichkeit kann ein durchgehend verbessertes Ansprechverhalten der Bremsvorrichtung realisiert werden, und damit eine erhöhte Betriebssicherheit und ein höherer Bedienkomfort.

Ein weiterer Vorteil gegenüber einer im Stand der Technik beschriebenen Rastkupplung ist, dass zum Betätigen und Lösen der Kupplungsvorrichtung im Wesentlichen keine axiale Relativbewegung zwischen den im Kupplungseingriff stehenden Kupplungselementen erforderlich ist, beispielsweise zwischen den Antriebsrädern oder den Rastelementen, die zum Erzeugen und Lösen des rastbaren Formschlusses zwangsläufig zueinander bewegbar sein müssen. Dagegen kann der reine Kraftschluss zwischen dem erfindungsgemäßen Reib- und Gegenreibelement einfach durch die angelegte axiale Betätigungskraft vorgegeben werden, wobei Reib- und Gegenreibelement nicht axial relativ zueinander bewegt werden müssen. Dadurch wird eine einfachere und zuverlässigere konstruktive Gestaltung der Kupplungsvorrichtung ermöglicht.

Es kann vorgesehen sein, dass die Reibkupplung ein definiert vorgebbares Kupplungsmoment aufweist. Das Kupplungsmoment gibt das maximale Differenzmoment an, welches durch den Reibschluss im Kupplungseingriff kraftschlüssig zwischen Reibelement und Gegenreibelement übertragen werden kann. Beim Überschreiten des Kupplungsmoments rutscht die Kupplungsvorrichtung durch, so dass die beiden Antriebsräder relativ zueinander verdreht werden. Ein Vorteil dabei ist, dass die erfindungsgemäße Reibkupplung kontinuierlich gleitend durchrutscht, so dass eine verbesserte, gleichmäßige Nachjustierung des Luftspalts ermöglich wird. Darüber hinaus müssen keine axialen Ausweichbewegungen von Rastelementen wie bei der bekannten Rastkupplung konstruktiv berücksichtigt und abgefangen werden.

Es ist vorteilhaft, dass das Reibelement und das Gegenreibelement koaxial angeordnet sind. Dabei korrespondiert die koaxiale Anordnung mit der koaxialen Anordnung der Antriebsräder. Das Reibelement und das Gegenreibelement können konstruktiv einfach und in einer kompakten Bauform im Bereich der axial gegeneinander gerichteten Stirnseiten der Antriebsräder angeordnet sein. Durch die vorangehend beschriebene Erzeugung des reinen Kraftschlusses der Kupplung sind keinerlei bewegliche Teile wie bei der Rastkupplung im Stand der Technik erforderlich.

In einer vorteilhaften Ausführung kann vorgesehen sein, dass das Reibelement und das Gegenreibelement konisch ausgebildet sind. Das Reibelement kann dabei einen zumindest abschnittweise in der axialen Verstellrichtung zusammenlaufenden Kegelabschnitt mit einer konischen Reibfläche aufweisen, der als Außenkonus oder Innenkonus ausgebildet sein kann, und der mit einem korrespondierenden Kegelabschnitt am Gegenreibelement, der entsprechend gegensinnig als Innenkonus oder Außenkonus ausgestaltet ist und eine konische Gegenreibfläche aufweist. Zur Erzeugung des Kupplungseingriffs taucht der Außenkonus in den Innenkonus ein, wobei die konischen Reib- und Gegenreibflächen durch eine axiale Betätigungskraft der Kupplung reibschlüssig gegeneinander belastet werden. Ein Vorteil dabei ist, dass durch den Konus eine Kraftübersetzung der axial einwirkenden Betätigungskraft der Kupplung in die zwischen den konischen Reibflächen im Reibkontakt wirkende Normalkraft erfolgen kann. So kann durch eine flachere Steigung eine relativ kleine axiale Betätigungskraft in eine größere Normalkraft im Reibkontakt umgesetzt werden, wodurch bereits durch eine relativ kleine axiale Betätigungskraft der Kupplung ein hohes Kupplungsmoment realisierbar ist.

Alternativ oder zusätzlich zu der vorgenannten Ausführung kann vorgesehen sein, dass das Reibelement und das Gegenreibelement planar ausgebildet sind. Dabei sind die miteinander korrespondierenden Reibflächen zumindest abschnittweise als plane Axialflächen ausgebildet, ähnlich einer Scheibenkupplung. Es wird eine bauraumsparende Anordnung ermöglicht, insbesondere wenn nur ein relativ kleines Kupplungsmoment realisiert werden soll.

Es kann bevorzugt vorgesehen sein, dass das Reibelement und das Gegenreibelement gegeneinander vorgespannt sind. Bevorzugt sind das Reibelement und das Gegenreibelement elastisch bzw. federnd gegeneinander vorgespannt. Dabei werden die Reib- und Gegenreibflächen mit einer vorgegebenen axialen Vorspannkraft im Reibschluss gegeneinander angepresst. Zur Erzeugung der Vorspannkraft kann bevorzugt ein elastisches Vorspannelement vorgesehen sein, beispielsweise ein Federelement oder dergleichen. Das Kupplungsmoment der Reibkupplung wird durch die senkrecht zum Reibkontakt wirkende Betätigungskraft bestimmt, also die axial zwischen Reib- und Gegenreibelement aufgebrachte Kraft, wobei das Kupplungsmoment umso größer ist, je größer die Vorspannkraft ist. Dies eröffnet die vorteilhafte Möglichkeit, das Kupplungsmoment einfach durch die durch das Vorspannelement ausgeübte Vorspannkraft vorzugeben. Beispielsweise kann bei einem in axialer Richtung druckelastischen Federelement, wie einer Druckfeder, die ausgeübte Vorspannkraft einfach durch der Federkonstante und die Kompression der Feder vorgegeben und angepasst werden.

Die vorgenannte Ausführungsform kann in vorteilhafter Weise dadurch realisiert sein, dass das Reibelement und/oder das Gegenreibelement axial verlagerbar und über ein axial wirksames Federelement gegen das erste Antriebsrad oder das zweite Antriebsrad abgestützt ist. Das Reibelement oder das Gegenreibelement sind dabei drehmomentschlüssig, und axial verlagerbar mit dem einen Antriebsrad verbunden, beispielsweise über radial vorstehende, einen in Umfangsrichtung wirksamen Formschluss erzeugende Mitnehmer. Das zwischen dem Reibelement oder dem Gegenreibelement und dem einen Antriebsrad axial eingespannte Federelement, welches bevorzugt als axial wirksame Druckfeder ausgebildet ist, sorgt dafür, dass das Reib- oder Gegenreibelement axial gegen das korrespondierende, an dem anderen Antriebsrad axial abgestützte Gegenreib- oder Reibelement vorgespannt, d.h. axial im Reibkontakt dagegen angepresst wird. Das korrespondierende Gegenreib- oder Reibelement ist drehschlüssig mit dem jeweils anderen Antriebsrad verbunden. Es ist auch möglich, dass alternativ oder zusätzlich das Gegenreibelement über ein Federelement an einem der Antriebsräder abgestützt ist. Ein Vorteil dieser Anordnung ist, dass die erfindungsgemäße Reibkupplung konstruktiv einfach und bauraumsparend zwischen den Antriebsrädern eingegliedert werden kann.

In einer vorteilhaften Weiterbildung ist es möglich, dass das Reibelement und/oder das Gegenreibelement in dem ersten Antriebsrad oder dem zweiten Antriebsrad angeordnet ist. So ist es beispielsweise möglich, das eine Antriebsrad im Wesentlichen trommelförmig zu gestalten, so dass in einem von dem umlaufenden Zahnrad oder Zahnkranz umschlossenen Innenraum das Reib- oder Gegenreibelement angeordnet sein kann. Dadurch wird eine kompakte, gegen äußere Einflüsse geschützte Bauform ermöglicht. So kann beispielsweise das Antriebsrad des ersten Stelltriebs ein konisches Reibelement aufweisen, welches axial in ein als Innenkonus ausgebildetes Gegenreibelement eingreift, das zumindest teilweise innerhalb des zweiten Antriebsrads angeordnet ist.

Eine besonders kompakte Bauform kann - insbesondere bei der zuletzt genannten Ausführung - dadurch realisiert sein, dass die Antriebsräder innerhalb der axialen Erstreckung der Stelltriebe angeordnet sind, also nicht einseitig axial vorstehend angebracht sind.

Es ist bevorzugt, dass das Reibelement und/oder das Gegenreibelement einen Reibbelag aufweisen. Das Reib- und Gegenreibelement weisen bevorzugt einen metallischen Grundkörper auf, beispielsweise aus Stahl. Zur Vermeidung von Metall-Metall-Kontakt kann bevorzugt eine Beschichtung oder ein Belag zur Erzeugung einer Reibpaarung mit einer definierten Reibkraft aufgebracht sein, beispielsweise aus Sinter-, Metall- und/oder Keramikreibwerkstoffen, Verbundwerkstoffen oder dergleichen. Dadurch kann ein definiertes, reproduzierbares Kupplungsmoment gewährleistet werden.

Es kann vorgesehen sein, dass ein Stelltrieb einen Spindeltrieb aufweist. Dabei greift in an sich bekannter Weise eine Gewindespindel in eine Spindelmutter ein, und ein relativer drehender Antrieb über ein mit der Gewindespindel oder der Spindelmutter verbundenes Antriebsrad. Es ist möglich, dass die Spindelmutter das antriebsseitige Antriebselement des Stelltriebs bildet, und die Gewindespindel das relativ dazu linear verstellbare, ausgangsseitige Abtriebselement, oder umgekehrt.

Es ist möglich, dass ein Stelltrieb eine Kugelrampenanordnung, Keilscheibenanordnung, oder eine Kippstiftanordnung aufweist. Bei einer Kugelrampenanordnung, auch als Rampenlager bezeichnet, weisen das Antriebs- und Abtriebselement bevorzugt Kurvenscheiben mit gegen die Achse geneigten Laufbahnen oder Rampen auf, zwischen denen in Umfangsrichtung abwälzbare Kugeln angeordnet sind. Eine relative Drehung führt durch die dabei auf den Rampen abrollenden Kugel dazu, dass das Abtriebselement relativ zum Antriebselement axial verlagert wird. Bei einer an sich bekannten Kippstiftanordnung sind Kippstifte derart zwischen Antriebs- und Abtriebselement angeordnet und jeweils in Umfangsrichtung abgestützt, dass sie bei einer relative Drehung je nach Drehrichtung stärker oder schwächer gegen die Achse geneigt sind, wodurch der Abstand zwischen Antriebs- und Abtriebselement ebenfalls verstellbar ist.

In der Stellvorrichtung können zwei gleichartig wirkende Stelltriebe als erste und zweite Stelltriebe miteinander kombiniert sein, beispielsweise zwei Spindeltriebe. Es ist auch möglich, zwei unterschiedliche Bauarten miteinander zu kombinieren, beispielsweise eine Kugelrampenanordnung als ersten Stelltrieb, und einen Spindeltrieb als zweiten Stelltrieb zur Justierung des Luftspalts. Dabei können die jeweiligen charakteristischen Eigenschaften jeder Bauform optimal ausgenutzt werden. Beispielsweise kann mit einer Kugelrampenanordnung mit geringem Aufwand eine nichtlineare Verstellcharakteristik realisiert werden, und/oder zumindest abschnittweise selbsthemmende Eigenschaften, und/oder eine definierte Totpunkt- oder Strecklage, die einen definierten Verstellweg ermöglicht. Die Realisierung der genannten positiven Eigenschaften kann zumindest teilweise eine präzise Vorgabe des Luftspalts erfordern, was mit der Rastkupplung im Stand der Technik nicht möglich ist, mittels der erfindungsgemäßen Reibkupplung jedoch problemlos realisiert werden kann.

Bei einem Verfahren zum Betrieb einer elektromechanischen Bremsvorrichtung, die eine Stellvorrichtung umfassend einen ersten Stelltrieb und einen seriell damit gekoppelten Stelltrieb aufweist, und welche auf ein Bremsteil wirkt, das in Richtung einer Achse mit einem Gegenbremsteil in Bremseingriff bringbar ist, wobei der erste Stelltrieb ein drehend antreibbares erstes Antriebsrad aufweist, auf das zur Betätigung ein erstes Antriebsmoment aufgebacht werden kann, und der zweite Stelltrieb ein drehend antreibbares, zu dem ersten Antriebsrad koaxiales zweites Antriebsrad aufweist, auf das zur Betätigung ein zweites Antriebsmoment aufgebracht werden kann, wobei zwischen dem ersten Antriebsrad und dem zweiten Antriebsrad eine Kupplungsvorrichtung angeordnet ist, ist erfindungsgemäß vorgesehen, dass die Kupplungsvorrichtung als Reibkupplung ausgebildet ist und ein vorgebbares Kupplungsmoment aufweist, bei dessen Überschreiten das erste Antriebsrad relativ zum zweiten Antriebsrad gleitend durchrutscht, wobei zur Betätigung des ersten Stelltriebs das erste Antriebsrad und das zweite Antriebsrad synchron angetrieben werden, so dass der zweite Stelltrieb unbetätigt bleibt, und zur Betätigung des zweiten Stelltriebs das zweite Antriebsrad angetrieben wird, und das erste Antriebsrad relativ dazu stillgesetzt wird, so dass die Reibkupplung durchrutscht und er erste Stelltrieb unbetätigt bleibt.

Die vorangehend im Zusammenhang mit der erfindungsgemäßen Bremsvorrichtung genannten Merkmale können einzeln und in Kombinationen zur Umsetzung des erfindungsgemäßen Verfahrens genutzt werden.

Zur Verstellung des ersten Stelltriebs kann mittels eines ersten elektrischen Stellmotors ein Stellmoment in das erste Antriebsrad eingekoppelt werden, und entsprechend kann der zweite Stelltrieb durch einen zweiten elektrischen Stellmotor angetrieben werden.

Im normalen Bremsbetrieb werden das erste und das zweite Antriebsrad synchron rotiert. Dies kann zum einen dadurch erfolgen, dass das erste und zweite Antriebsrad von den ersten und zweiten Stellmotoren mit synchronisierten Antriebsmomenten angetrieben werden. Zum anderen kann das zweite Antriebsrad beim Antrieb des ersten Antriebsrads durch die Kupplungsvorrichtung synchron mitgenommen werden, solange das übertragene Antriebsmoment unterhalb des Kupplungsmoments bleibt. In diesem Betriebsmodus bleibt der zweite Stelltrieb unbetätigt, und dreht als Ganzes zusammen mit dem Bremselement leer mit.

Bei erfindungsgemäßen Verfahren kann die Kupplungsvorrichtung beim Überschreiten des Kupplungsmoments zur Justierung des Luftspalts im Gegensatz zum Stand der Technik kontinuierlich und gleichmäßig gleitend durchrutschen. Dies kann beispielsweise dadurch realisiert werden, dass das Antriebsrad des ersten Stelltriebs festgesetzt wird, beispielsweise durch eine Bremse oder eine entsprechende Ansteuerung des ersten Antriebsmotors, während durch den zweiten Antriebsmotor ein zweites Antriebsmoment auf das zweite Antriebsrad aufgebracht wird, welches größer ist als das Kupplungsmoment. Dadurch wird das zweite Antriebsrad relativ zum ersten Antriebsrad verdreht, und durch Betätigung des zweiten Stelltriebs kann der Luftspalt kontinuierlich und feinfühlig justiert werden, so dass eine kontinuierlich fortschreitende Abnutzung des Bremselements bzw. des Bremsbelags optimal ausgeglichen werden kann.

Es ist möglich, dass das erste Antriebsrad und das zweite Antriebsrad zur Erzeugung eines synchronen Antriebs durch die Reibkupplung drehmomentschlüssig gekuppelt werden. Dabei ist im kein synchroner Antrieb der beiden Antriebsräder durch die Stellmotoren erforderlich. Eventuelle Drehmomentdifferenzen können innerhalb vorgegebener Toleranzen ausgeglichen werden.

Es kann mit Vorteil vorgesehen sein, dass bei der Betätigung des ersten Stelltriebs ein höheres Kupplungsmoment vorgegeben wird, als bei der Betätigung des zweiten Stelltriebs. Der erste Stelltrieb wird durch synchronen Antrieb des ersten und des zweiten Antriebsrads betätigt. Das Reibelement und das Gegenreibelement werden durch die Federkraft des Federelements gegeneinander vorgespannt, und zusätzlich wirkt entgegengesetzt zur Federkraft die Verstellkraft des ersten Stelltriebs. Dadurch wird ein relativ hohes Kupplungsmoment realisiert. Wird hingegen zur Justierung des Luftspalts nur das zweite Antriebsrad gedreht, so wirkt allein die Federkraft, so dass ein niedrigeres Kupplungsmoment eingestellt wird. Dadurch wird die Justierung des Luftspalts erleichtert.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Bremsvorrichtung in einer schematischen perspektivischen Ansicht,
- Figur 2: eine seitliche Ansicht der Bremsvorrichtung gemäß Figur 1,
- Figur 3: die erfindungsgemäße Stellvorrichtung der Bremsvorrichtung gemäß Figur 1 freigestellt in einer schematischen perspektivischen Ansicht,
- Figur 4: einen Schnitt Q-Q durch die Bremsvorrichtung gemäß Figur 1,
- Figur 5: den ersten Stelltrieb der Bremsvorrichtung gemäß Figur 1 freigestellt in einer schematischen perspektivischen Darstellung,
- Figur 6: eine vergrößerte Detailansicht der Stellvorrichtung aus Figur 4,
- Figur 7: die Stelltriebe der Stellvorrichtung gemäß Figur 4 in einer schematisch axial auseinander gezogenen Darstellung,
- Figur 8: eine vergrößerte Teildarstellung des zweiten Stelltriebs aus Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

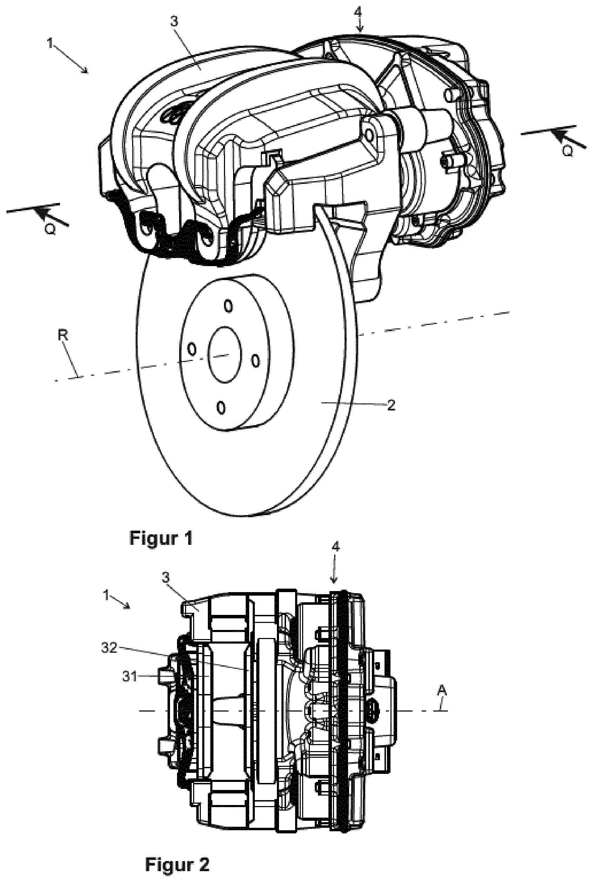

Fig. 1 zeigt eine erfindungsgemäße Bremsvorrichtung als Ganzes, die als Scheibenbremse ausgebildet ist. Diese umfasst eine Bremsscheibe 2, die ein Gegenbremsteil im Sinne der Erfindung bildet und mit einem hier nicht dargestellten, um eine Radachse R rotierbaren Fahrzeugrad verbunden ist. Ein Bremssattel 3 umgreift die beiden axialen Stirnflächen der Bremsscheibe 2.

Die Bremsscheibe 2 ist hier als unbelüftete Bremscheibe aus Vollmaterial ausgebildet. Alternativ kann diese auch als innenbelüftete Bremsscheibe ausgebildet sein.

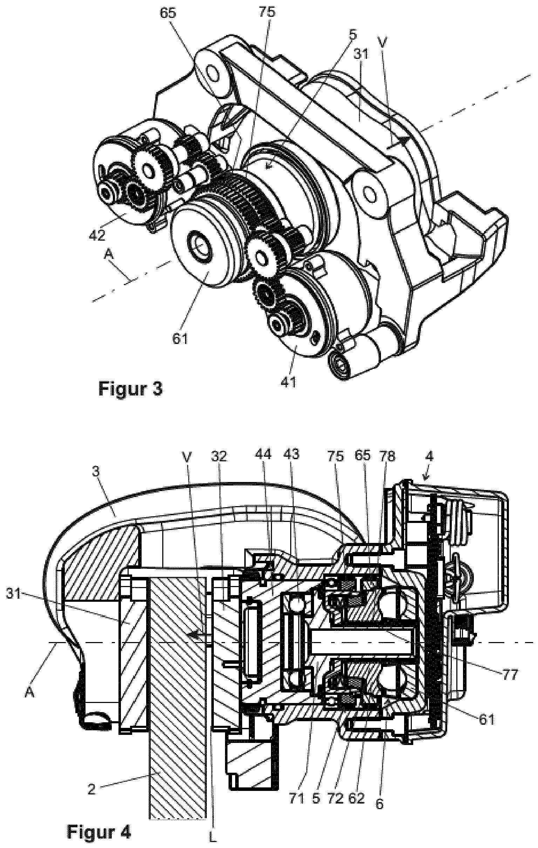

An dem Bremssattel 3 ist ein erfindungsgemäßer elektrischer Bremsaktuator 4 angebracht, die in Figur 3 in einer separaten, freigestellten schematischen perspektivischen Ansicht gezeigt ist, und in den Figuren 4 bis 7 im Detail erläutert wird.

Der Bremsaktuator 4 umfasst eine Stellvorrichtung 5, die sich axial in Richtung einer Achse A erstreckt, welche parallel zur Radachse R liegt und die axiale Verstellrichtung V der Stellvorrichtung 5 angibt.

Wie in der Schnittdarstellung von Figur 4 längs der Achse A erkennbar ist, ist die Bremsscheibe 2 axial zwischen zwei Bremsbelägen 31 und 32 angeordnet. Der eine Bremsbelag 31 ist auf der dem Bremsaktuator 4 abgewandten Seite fest an dem Bremssattel 3 abgestützt. Der andere Bremsbelag 32, der ein Bremsteil im Sinne der Erfindung bildet, ist an der Stellvorrichtung 5 angebracht und von dieser in der durch die Achse A gegebenen, axialen Verstellrichtung V zur Erzeugung des Bremseingriffs auf die Bremsscheibe 2 zu verstellbar, wie in Figur 4 mit dem Pfeil angedeutet ist.

Im unbetätigten Zustand der Bremsvorrichtung 1 befindet sich zwischen der Bremsscheibe 2 und dem verstellbaren Bremsbelag 32 ein axialer Luftspalt L, der in Figur 4 schematisch übertrieben breit eingezeichnet ist.

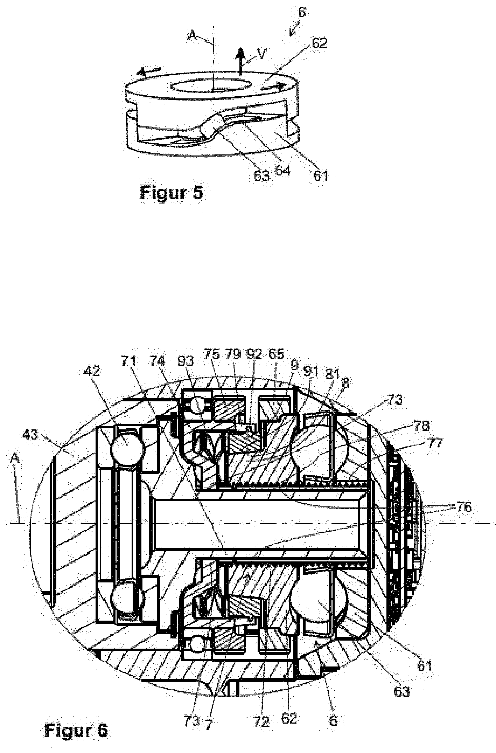

Der Aufbau der Stellvorrichtung 5 ist in Figur 4 und in dem vergrößerten Ausschnitt daraus in Figur 6 dargestellt.

Die Stellvorrichtung 5 umfasst einen ersten Stelltrieb 6, der ein Rampenlager aufweist, und einen damit axial (bezüglich der Achse A) seriell gekoppelten zweiten Stelltrieb 7, der einen Spindeltrieb aufweist.

Der erste Stelltrieb 6, der im gezeigten Beispiel als Rampenlager ausgebildet ist, umfasst eine axial und drehfest an dem Bremsaktuator 4 abgestützte, antriebseitige Kurvenscheibe 61 und eine abtriebsseitige Kurvenscheibe 62. Zwischen den Kurvenscheiben 61 und 62 sind Kugeln 63 angeordnet. Wie in der schematisch freigestellten Ansicht von Figur 5 erkennbar ist, weisen die Kurvenscheiben 61 und 62 einander axial gegenüberliegende rampenartige, schräg zur Achse A liegende Laufbahnen 64 auf, zwischen denen die Kugeln 63 abwälzbar sind. Eine Drehung der abtriebsseitigen Kurvenscheibe 62, in Figur 5 oben, relativ zu der feststehenden antriebsseitigen Kurvenscheibe 61 - wie schematisch mit den gebogenen Pfeilen angedeutet - führt zu einer linearen Verstellung der abtriebsseitigen Kurvenscheibe 62 in der Verstellrichtung V parallel zur Achse A. Dadurch kann der Bremsbelag 32 wie in Figur 4 eingezeichnet durch Betätigung des ersten Stelltriebs 6 in Bremseingriff gebracht werden.

Die Kurvenscheibe 62 ist mit einem koaxialen Zahnrad 65 verbunden, welches als Stirnrad ausgebildet ist und ein Antriebsrad im Sinne der Erfindung bildet.

Das Zahnrad 65 steht im Getriebeeingriff mit einem ersten elektrischen Stellmotor 41. Dieser ermöglicht den drehenden Antrieb der Kurvenscheibe 62 und damit eine Betätigung des ersten Stelltriebs 6.

Der zweite Stelltrieb 7, der erfindungsgemäß als Spindeltrieb ausgebildet ist, weist abtriebsseitig eine Gewindespindel 71 auf, die mit ihrem Außengewinde 77, auch als Spindelgewinde bezeichnet, in das Innengewinde 78 einer antriebsseitigen Spindelmutter 72 eingreift. Dieses Innengewinde 78 ist in der Kurvenscheibe 62 des ersten Stelltriebs 6 integriert ausgebildet, so dass das die Funktionen der abtriebsseitigen Kurvenscheibe 62 und der antriebsseitigen Spindelmutter 72 in einem Bauelement vereinigt sind.

Die Gewindespindel 71 ist über ein Nabenteil 74 mit einem koaxialen Zahnrad 75 verbunden, welches axial fixiert in dem Bremsaktuator 4 drehbar gelagert ist.

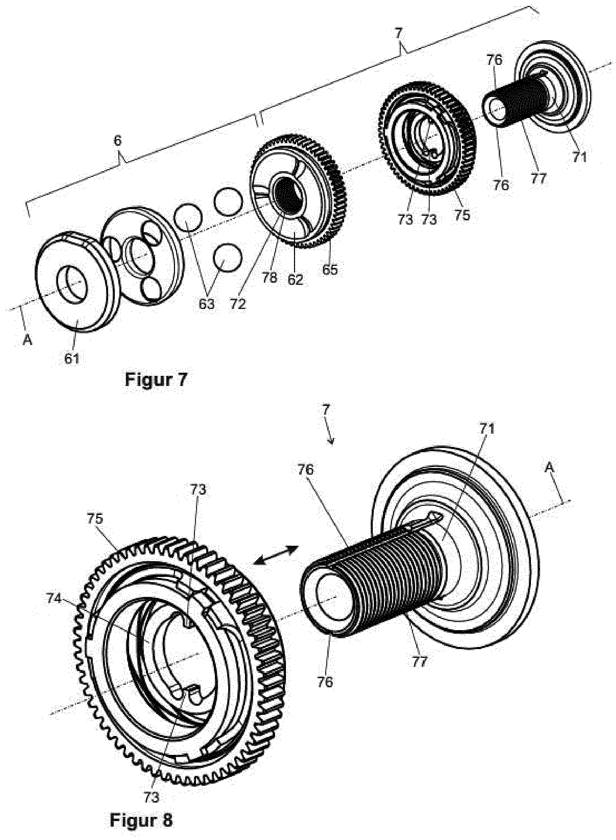

Die Gewindespindel 71 ist durch einen axialen Durchgang in dem Zahnrad 75, konkret in den Nabenteil 74, axial hindurchgeführt. In dem Durchgang sind die radial nach innen vorstehenden Mitnehmer 73 vorgesehen, die beispielsweise radial vorstehende Vorsprünge oder Zähne aufweisen können. Die Mitnehmer 73 greifen radial von außen in Axialnuten 76 in der Gewindespindel 71, die auch als Schlitze bezeichnet werden, zur Bildung eines in Umfangsrichtung wirksamen Formschlusses ein und sind in den Axialnuten 76 axial verschiebbar. Dadurch ist die Gewindespindel 71 drehmomentschlüssig und axial verlagerbar mit dem Zahnrad 75 gekuppelt. Figur 7 zeigt die Funktionselemente der Stelltriebe 6 und 7 in einer in Richtung der Achse A schematisch auseinander gezogenen Darstellung, und Figur 8 die Gewindespindel 71 und das Zahnrad 75 des zweiten Spindeltriebs 7 in einer vergrößerten Ansicht von Figur 7. Die Gewindespindel 71 weist das Außengewinde (Spindelgewinde) 77 auf, das in das korrespondierende Innengewinde 78 der Spindelmutter 72 eingreift. Die Spindelmutter 72 ist vorzugsweise mit der Kurvenscheibe 62 des ersten Stelltriebs 6 integriert ausgebildet.

Die Gewindespindel 71 weist im Beispiel zwei Axialnuten 76 auf, die einander gegenüberliegend symmetrisch über den Umfang verteilt sind und sich über die gesamte Länge des Außengewindes 77 erstrecken. Die Axialnuten 76 können bevorzugt radial tiefer eingeformt sein als die Gewindenut des Außengewindes 77.

In dem axialen Durchgang des Zahnrads 75 sind zwei radial nach innen ragende Mitnehmer 73 angeordnet, die zur Bildung einer drehschlüssigen Verbindung in die Axialnuten 76 eingreifen können und dabei axial verschiebbar sind, wie in Figur 8 mit dem Doppelfeil angedeutet ist.

Die Mitnehmer 73 können einstückig an dem Nabenteil 74 oder dem Zahnrad 75 angeformt sein, beispielsweise an einem Spritzgussteil aus Kunststoff oder einem metallischen Druckgussteil.

Das Zahnrad 75 kann wie das Zahnrad 65 als Stirnrad ausgeführt sein und ist zu diesem benachbart koaxial angeordnet. Dieses Zahnrad 75 steht im Getriebeeingriff mit einem zweiten elektrischen Stellmotor 42. Dieser ermöglicht den drehenden Antrieb der Gewindespindel 71 und damit eine Betätigung des zweiten Stelltriebs 7.

Die Gewindespindel 71 ist über ein Drucklager 43, beispielsweise wie dargestellt ein Axialwälzlager, axial mit einem Druckstück 44 verbunden, an dem der verlagerbare Bremsbelag 32 angebracht ist, wie in Figur 4 erkennbar ist. Das Druckstück 44 kann auch als Kolben bezeichnet werden.

Optional kann eine Kupplungsvorrichtung vorgesehen sein. Die erfindungsgemäße Ausgestaltung des zweiten Stelltriebs 7 kann auch ohne eine derartige Kupplungsvorrichtung realisiert sein.

Die Kupplungsvorrichtung weist ein Reibelement 8 auf, welches als koaxialer, konischer Ansatz von der Kurvenscheibe 62 auf den zweiten Stelltrieb 7 zu gerichtet ist. Der konische Ansatz weist eine außen auf einem Außenkonus angeordnete konische Reibfläche 81 auf. Das Reibelement 81 kann bevorzugt einstückig mit der Kurvenscheibe 62 / Spindelmutter 72 ausgebildet sein.

Das Reibelement 8 ist im Kupplungseingriff reibschlüssig mit einem Gegenreibelement 9 gekuppelt. Dabei taucht der konische Ansatz axial in eine korrespondierende konische Öffnung des Gegenreibelements 9 ein, welche eine in einem Innenkonus angeordnete konische Reibfläche 91 aufweist. Im Kupplungseingriff liegen die Reibfläche 81 und die Gegenreibfläche 91 reibschlüssig gegeneinander an, wie in Figur 6 deutlich erkennbar ist.

Das Gegenreibelement 9 ist über Mitnehmer 92, die in korrespondierende Schlitze 79 in dem Nabenteil 74 oder dem Zahnrad 75 axial verschiebbar eingreifen, drehmomentschlüssig, aber axial verlagerbar mit dem Zahnrad 75 gekuppelt.

Zwischen dem Zahnrad 75 oder dem damit verbundenen Nabenteil 74 und dem Gegenreibelement 9 ist ein Federelement 93 angeordnet. Durch dessen axial wirksame Federkraft wird das Gegenreibelement 9 gegen das Reibelement 8 elastisch verspannt. Dadurch wird ein definiertes Kupplungsmoment der durch das Reibelement 8 und das Gegenreibelement 9 gebildeten erfindungsgemäßen Reibkupplung erzeugt.

Zur Betätigung der Bremsvorrichtung 1 werden die Zahnräder 65 und 75 synchron rotiert, so dass der erste Stelltrieb 6 einen Arbeitshub in der axialen Verstellrichtung V ausführt, so dass der Bremsbelag 32 den Luftspalt L passiert und in Bremseingriff mit der Bremsscheibe 2 kommt. Der synchrone Antrieb der Zahnräder 65 und 75 kann durch eine Synchronisierung der Antriebsgeschwindigkeiten der Stellmotoren 41 und 42 bewerkstelligt werden, oder durch den Antrieb durch nur einen der Stellmotoren 41 oder 42, während der jeweils andere Stellmotor 42 oder 41 leer mitläuft. Dann sorgt der reibschlüssige Kupplungseingriff zwischen dem Reibelement 8 und dem Gegenreibelement 9 für eine synchrone Drehung der Zahnräder 65 und 75.

Zur Justierung der Breite des Luftspalts L wird das Zahnrad 65 festgesetzt oder blockiert, beispielsweise durch eine entsprechende Ansteuerung des ersten Stellmotors 41. Durch den zweiten Stellmotor 42 wird das Zahnrad 75 relativ zum Zahnrad 65 verdreht, wobei die Reibkupplung kontinuierlich gleitend durchrutscht. Entsprechend wird der zweite Stelltrieb 7 gleichmäßig verstellt, wodurch die Breite des Luftspalts L ebenfalls kontinuierlich eingestellt und angepasst werden kann, um beispielsweise Abnutzung des Bremsbelags 32 zu kompensieren.

Dadurch, dass das Reibelement 8 und das Gegenreibelement 9 ganz oder zumindest teilweise innerhalb der Zahnräder 65 und 75 angeordnet sind, kann eine besonders kompakte Bauweise realisiert werden.

Die in den Figuren 1 bis 6 dargestellten Bremsvorrichtungen sind als Schwimmsattelbremse, auch als Faustsattelbremse bezeichnet, ausgebildet. Dabei wird der Bremsbelag 32 durch das Druckstück 44, und der Bremsbelag 31 durch den gegenüber der Bremsscheibe 2 in Richtung der Achse A verschiebbaren Bremssattel 3 an die Bremsscheibe 2 gedrückt. Alternativ kann die erfindungsgemäße Lösung auch bei einer Festsattelbremse zum Einsatz kommen.

### Bezugszeichenliste

- 1: Bremsvorrichtung
- 2: Bremsscheibe
- 3: Bremssattel
- 31, 32: Bremsbelag
- 4: Bremsaktuator
- 41, 42: Stellmotor
- 43: Drucklager
- 44: Druckstück
- 5: Stellvorrichtung
- 6: erster Stelltrieb
- 61: Kurvenscheibe
- 62: Kurvenscheibe (integriert mit Spindelmutter 72)
- 63: Kugel
- 64: Laufbahn
- 65: Zahnrad
- 7: zweiter Stelltrieb
- 71: Gewindespindel
- 72: Spindelmutter (integriert mit Kurvenscheibe 62)
- 73: Mitnehmer
- 74: Nabenteil
- 75: Zahnrad
- 76: Axialnut (Schlitz)
- 77: Außengewinde (Spindelgewinde)
- 78: Innengewinde
- 79: Schlitz
- 8: Reibelement
- 81: Reibfläche
- 9: Gegenreibelement
- 91: Gegenreibfläche
- 92: Mitnehmer
- 93: Federelement

- A: Achse
- R: Radachse
- V: Verstellrichtung
- L: Luftspalt

## Patentansprüche

1. Elektromechanische Bremsvorrichtung (1) für ein Kraftfahrzeug, umfassend eine Stellvorrichtung (5) und ein damit verbundenes Bremsteil (32), das von der Stellvorrichtung (5) entlang einer Achse (A) verstellbar und mit einem Gegenbremsteil (2) in Bremseingriff bringbar ist,
wobei die Stellvorrichtung (5) einen ersten Stelltrieb (6) und einen seriell damit gekoppelten zweiten Stelltrieb (7) aufweist,
wobei der erste Stelltrieb (6) ein drehend antreibbares erstes Antriebsrad (65) aufweist, von dem ein erstes Abtriebselement (62) und ein relativ dazu axial verstellbares erstes Antriebselement (61) relativ zueinander drehend antreibbar sind, und der zweite Stelltrieb (7) ein drehend antreibbares, zu dem ersten Antriebsrad koaxiales zweites Antriebsrad (75) aufweist, von dem eine Gewindespindel (71) drehend antreibbar ist, die ein Spindelgewinde (77) aufweist, welches in ein Innengewinde (78) des ersten Stelltriebs (6) eingreift,
**dadurch gekennzeichnet,**
**dass** die Gewindespindel (71) und das zweite Antriebsrad (75) korrespondierende, ineinandergreifende Formschlusselemente (73, 76) aufweisen, die zur Erzeugung eines bezüglich Drehung um die Achse (A) in Umfangsrichtung wirksamen Formschlusses ausgebildet sind, und die axial relativ zueinander verlagerbar sind.

2. Bremsvorrichtung nach Anspruch 1, **dadurch gekennzeichnet, dass** ein Formschlusselement (76) im Bereich des Spindelgewindes (77) angeordnet ist.

3. Bremsvorrichtung nach einem der vorangehenden Ansprüche, **dadurch gekennzeichnet, dass** die Formschlusselemente (73, 76) einen von dem zweiten Antriebsrad (75) radial nach innen vorstehenden Mitnehmer (73) und eine Axialnut (76) in dem Spindelgewinde (77) umfassen, in welche der Mitnehmer (73) eingreift.

4. Bremsvorrichtung nach Anspruch 3, **dadurch gekennzeichnet, dass** die Axialnut (76) sich über das gesamte Spindelgewinde (77) erstreckt.

5. Bremsvorrichtung nach Anspruch 3 oder 4, **dadurch gekennzeichnet, dass** die Axialnut (76) radial tiefer in die Gewindespindel (71) eingeformt ist als die Gewindegänge des Spindelgewindes (77).

6. Bremsvorrichtung nach einem der vorangehenden Ansprüche, **dadurch gekennzeichnet, dass** eine Mehrzahl von Formschlusselementen (73, 76) über den Umfang verteilt angeordnet ist.

7. Bremsvorrichtung nach einem der vorangehenden Ansprüche 3 bis 6, **dadurch gekennzeichnet, dass** der Mitnehmer (73) einstückig mit dem zweiten Antriebsrad (75) ausgebildet ist.

8. Bremsvorrichtung nach einem der vorangehenden Ansprüche, **dadurch gekennzeichnet, dass** das Innengewinde (78) in dem ersten Abtriebselement (62) ausgebildet ist.

9. Bremsvorrichtung nach einem der vorangehenden Ansprüche, **dadurch gekennzeichnet, dass** der erste Stelltrieb (6) ein Kugelrampenlager, eine Keilscheibenanordnung oder eine Kippstiftanordnung aufweist.

10. Bremsvorrichtung nach einem der vorangehenden Ansprüche, **dadurch gekennzeichnet, dass** zwischen dem ersten Antriebsrad (65) und dem zweiten Antriebsrad (75) eine Kupplungsvorrichtung (8, 9) angeordnet ist, die als Reibkupplung (8, 9) mit einem Reibelement (8) ausgebildet ist, das im Kupplungseingriff reibschlüssig mit einem Gegenreibelement (9) verbindbar ist.

11. Bremsvorrichtung nach Anspruch 10, **dadurch gekennzeichnet, dass** die Reibkupplung (8, 9) ein definiert vorgebbares Kupplungsmoment aufweist.

12. Bremsvorrichtung nach einem der vorangehenden Ansprüche 10 bis 11, **dadurch gekennzeichnet, dass** das Reibelement (8) und das Gegenreibelement (9) koaxial angeordnet sind.

13. Bremsvorrichtung nach einem der vorangehenden Ansprüche 10 bis 12, **dadurch gekennzeichnet, dass** das Reibelement (8) und das Gegenreibelement (9) konisch ausgebildet sind.

14. Bremsvorrichtung nach einem der vorangehenden Ansprüche 10 bis 13, **dadurch gekennzeichnet, dass** das Reibelement (8) und das Gegenreibelement (9) planar ausgebildet sind.

15. Bremsvorrichtung nach einem der vorangehenden Ansprüche 10 bis 14, **dadurch gekennzeichnet, dass** das Reibelement (8) und das Gegenreibelement (9) gegeneinander vorgespannt sind.

## Claims

1. Electromechanical brake device (1) for a motor vehicle, comprising an adjusting device (5) and a brake part (32) which is connected thereto, can be adjusted along an axis (A) by the adjusting device (5) and can be brought into braking engagement with a counter-brake part (2),
wherein the actuating device (5) has a first actuating drive (6) and a second actuating drive (7) serially coupled thereto,
wherein the first actuating drive (6) has a rotatably drivable first drive wheel (65), from which a first output element (62) and a first drive element (61), which is axially adjustable relative thereto, can be driven in rotation relative to one another, and the second actuator (7) has a second drive wheel (75) which can be driven in rotation and is coaxial with the first drive wheel and from which a threaded spindle (71) can be driven in rotation, which spindle has a spindle thread (77) which engages in an internal thread (78) of the first actuator (6),
**characterised in**
**in that** the threaded spindle (71) and the second drive wheel (75) have corresponding, interlocking positive-locking elements (73, 76) which are designed to generate a positive lock which is effective in the circumferential direction with respect to rotation about the axis (A), and which can be displaced axially relative to one another.

2. Brake device according to claim 1, **characterised in that** a positive locking element (76) is arranged in the region of the spindle thread (77).

3. Brake device according to one of the preceding claims, **characterised in that** the positive-locking elements (73, 76) comprise a driver (73) projecting radially inwards from the second drive wheel (75) and an axial groove (76) in the spindle thread (77), in which the driver (73) engages.

4. Brake device according to claim 3, **characterised in that** the axial groove (76) extends over the entire spindle thread (77).

5. Brake device according to claim 3 or 4, **characterised in that** the axial groove (76) is formed radially deeper into the threaded spindle (71) than the threads of the spindle thread (77).

6. Brake device according to one of the preceding claims, **characterised in that** a plurality of positive locking elements (73, 76) is arranged distributed over the circumference.

7. Brake device according to one of the preceding claims 3 to 6, **characterised in that** the driver (73) is formed integrally with the second drive wheel (75).

8. Brake device according to one of the preceding claims, **characterised in that** the internal thread (78) is formed in the first output element (62).

9. Brake device according to one of the preceding claims, **characterised in that** the first actuating drive (6) has a ball ramp bearing, a wedge disc arrangement or a rocker pin arrangement.

10. Brake device according to one of the preceding claims, **characterised in that** a clutch device (8, 9) is arranged between the first drive wheel (65) and the second drive wheel (75), which is designed as a friction clutch (8, 9) with a friction element (8) which can be connected in frictional engagement with a counter-friction element (9) in clutch engagement.

11. Brake device according to claim 10, **characterised in that** the friction clutch (8, 9) has a defined predeterminable clutch torque.

12. Brake device according to one of the preceding claims 10 to 11, **characterised in that** the friction element (8) and the counter-friction element (9) are arranged coaxially.

13. Brake device according to one of the preceding claims 10 to 12, **characterised in that** the friction element (8) and the counter-friction element (9) are conical.

14. Brake device according to one of the preceding claims 10 to 13, **characterised in that** the friction element (8) and the counter-friction element (9) are planar.

15. Brake device according to one of the preceding claims 10 to 14, **characterised in that** the friction element (8) and the counter-friction element (9) are pretensioned against each other.

## Revendications

1. Dispositif de freinage électromécanique (1) pour un véhicule automobile, comprenant un dispositif de réglage (5) et un élément de freinage (32) relié à celui-ci, qui peut être déplacé par le dispositif de réglage (5) le long d'un axe (A) et qui peut être amené en engagement de freinage avec un élément de freinage antagoniste (2),
le dispositif de réglage (5) présentant un premier mécanisme de réglage (6) et un deuxième mécanisme de réglage (7) couplé en série avec celui-ci,
le premier actionneur (6) présentant une première roue d'entraînement (65) pouvant être entraînée en rotation, par laquelle un premier élément de sortie (62) et un premier élément d'entraînement (61) réglable axialement par rapport à celui-ci peuvent être entraînés en rotation l'un par rapport à l'autre, et le deuxième actionneur (7) présente une deuxième roue d'entraînement (75) pouvant être entraînée en rotation, coaxiale à la première roue d'entraînement, par laquelle une broche filetée (71) peut être entraînée en rotation, laquelle présente un filetage de broche (77) qui s'engage dans un filetage intérieur (78) du premier actionneur (6),
**caractérisé en ce que**
que la broche filetée (71) et la deuxième roue d'entraînement (75) présentent des éléments de liaison par la forme (73, 76) correspondants, s'engageant l'un dans l'autre, qui sont conçus pour produire une liaison par la forme efficace dans le sens périphérique par rapport à la rotation autour de l'axe (A), et qui peuvent être déplacés axialement l'un par rapport à l'autre.

2. Dispositif de freinage selon la revendication 1, **caractérisé en ce qu'**un élément à engagement positif (76) est disposé dans la zone du filetage de la broche (77).

3. Dispositif de freinage selon l'une quelconque des revendications précédentes, **caractérisé en ce que** les éléments de verrouillage de forme (73, 76) comprennent un taquet (73) faisant saillie radialement vers l'intérieur de la deuxième roue motrice (75) et une rainure axiale (76) dans le filetage de la broche (77) dans laquelle le taquet (73) s'engage.

4. Dispositif de freinage selon la revendication 3, **caractérisé en ce que** la rainure axiale (76) s'étend sur la totalité du filetage de la tige (77).

5. Dispositif de freinage selon la revendication 3 ou 4, **caractérisé en ce que** la rainure axiale (76) est formée radialement plus profondément dans la tige filetée (71) que les filets de la tige filetée (77).

6. Dispositif de freinage selon l'une des revendications précédentes, **caractérisé en ce qu'**une pluralité d'éléments de blocage de forme (73, 76) sont répartis sur la périphérie.

7. Dispositif de freinage selon l'une quelconque des revendications précédentes 3 à 6, **caractérisé en ce que** l'entraîneur (73) est formé d'une seule pièce avec la deuxième roue motrice (75).

8. Dispositif de freinage selon l'une quelconque des revendications précédentes, **caractérisé en ce que** le filetage interne (78) est formé dans le premier élément de sortie (62).

9. Dispositif de freinage selon l'une quelconque des revendications précédentes, **caractérisé en ce que** le premier actionneur (6) comprend un palier à rampe à billes, un agencement de clavette ou un agencement de goupille basculante.

10. Dispositif de freinage selon l'une des revendications précédentes, **caractérisé en ce qu'**entre la première roue motrice (65) et la deuxième roue motrice (75) est disposé un dispositif d'accouplement (8, 9) qui est réalisé sous la forme d'un accouplement à friction (8, 9) avec un élément de friction (8) qui, en prise d'accouplement, peut être relié par friction à un élément de friction opposé (9).

11. Dispositif de freinage selon la revendication 10, **caractérisé en ce que** l'embrayage à friction (8, 9) présente un couple d'embrayage prédéfinissable de manière définie.

12. Dispositif de freinage selon l'une quelconque des revendications précédentes 10 à 11, **caractérisé en ce que** l'élément de friction (8) et l'élément de contre-frottement (9) sont disposés coaxialement.

13. Dispositif de freinage selon l'une des revendications précédentes 10 à 12, **caractérisé en ce que** l'élément de friction (8) et l'élément de contre-frottement (9) sont de forme conique.

14. Dispositif de freinage selon l'une des revendications précédentes 10 à 13, **caractérisé en ce que** l'élément de friction (8) et l'élément de contre-frottement (9) sont plans.

15. Dispositif de freinage selon l'une quelconque des revendications précédentes 10 à 14, **caractérisé en ce que** l'élément de friction (8) et l'élément de friction opposé (9) sont précontraints l'un par rapport à l'autre.
